# EUROPÄISCHE PATENTANMELDUNG

(11) **EP 2 608 379 A1**
(43) Veröffentlichungstag der Anmeldung: **26.06.2013**
(21) Anmeldenummer: 11194196.9
(22) Anmeldetag: 19.12.2011
(51) Int. Cl.: H02M 7/00, H02M 7/49

(54) **Stromrichterschaltung mit mechanisch verriegeltem Zwischenkreiskondensator**

(71) Anmelder: Siemens Aktiengesellschaft, 80333 München (DE)
(72) Erfinder: Adam, Alexander, 91284 Neuhaus (DE)

(57) **Zusammenfassung**

Die Erfindung betrifft eine Stromrichterschaltung (4), umfassend wenigstens zwei Submodule (22) in Reihenschaltung, die über eine Induktivität (20) elektrische Leistung aus einer eine Gleichspannung (18) abgebenden Leistungsquelle (8) bezieht, wobei jedes Submodul (22) eingangsseitig (26, 28) eine einphasige Halbbrücke (52) und lastseitig (30, 32) eine einphasige Vollbrücke (54) aufweist, und wobei die Halbbrücke (52) und die Vollbrücke (54) gleichspannungsseitig sowie parallel hierzu ein Zwischenkreiskondensator (34) geschaltet sind. Die angegebene Stromrichterschaltung umfasst ein Verriegelungselement (116) in wenigstens einem Submodul (22) zum Blockieren einer Bewegung (120) wenigstens des Zwischenkreiskondensators (34) des wenigstens einen Submoduls (22), wenn eine Spannung (64) am Zwischenkreiskondensator (34) einen vorbestimmten Wert überschreitet.

## Beschreibung

Die Erfindung betrifft eine Stromrichterschaltung gemäß dem Oberbegriff des Anspruchs 1, einen Elektromotor und ein Fahrzeug.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, die Bewegung wenigstens der Zwischenkreiskondensatoren, bevorzugt aber die Bewegung der Submodule selbst, wenn die Spannung am entsprechenden Zwischenkreiskondensator zu hoch ist.

Dem Vorschlag liegt die Überlegung zugrunde, dass die Zwischenkreiskondensatoren in den einzelnen Submodulen auf Spannungen aufgeladen sein können, die bei Berührung durch Personen oder elektrisch leitfähigen Gegenständen zu teils zu sehr hohen Entladeströmen führen können. Um eine unbeabsichtigte Entladung über diese Personen und/oder Gegenstände zu vermeiden, könnten die Zwischenkreiskondensatoren im Fehlerfall oder bei der Stilllegung der Stromrichterschaltung über eine Entladeschaltung entladen werden.

Der Erfindung liegt ferner die Überlegung zugrunde, dass die Entladung des Zwischenkreiskondensators über eine extra Entladeschaltung durchgeführt werden könnte. Wann die Entladung abgeschlossen ist, ist für den Anwender nicht sichtbar. Selbst wenn es für den Anwender sichtbar wäre, so wäre nicht gesichert, dass er den Zwischenkreiskondensator oder das Submodul beispielsweise aus Zeitdruck nicht bereits vor der vollständigen Entladung entfernt und sich so beispielsweise aus Unkenntnis einem Sicherheitsrisiko aussetzt.

Zur Vermeidung des Sicherheitsrisikos wird der Zwischenkreiskondensator beziehungsweise das Submodul durch ein Verriegelungselement solange in der Stromrichterschaltung der eingangs genannten Art gehalten, bis die Entladung gesichert ist und eine Spannung am Zwischenkreiskondensator einen vorbestimmten Schwellenwert unterschreitet.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf, wobei die Halbbrücke und die Vollbrücke gleichspannungsseitig sowie parallel hierzu ein Zwischenkreiskondensator geschaltet sind. Erfindungsgemäß umfasst wenigstens eines der Submodule ein Verriegelungselement zum Blockieren einer Bewegung des entsprechenden Zwischenkreiskondensators, wenn eine Spannung am Zwischenkreiskondensator einen vorbestimmten Wert überschreite.

Die Blockade der Bewegung erfolgt dabei relativ zu den restlichen Komponenten der angegebenen Stromrichterschaltung, so dass der entsprechende Zwischenkreiskondensator und/oder das entsprechende Submodul nicht aus der Stromrichterschaltung entfernt werden kann, solange die Spannung am Zwischenkreiskondensator zu hoch ist.

In einer Weiterbildung der Erfindung umfasst die angegebene Stromrichterschaltung eine Entladeschaltung zum Entladen des Zwischenkreiskondensators mindestens eines der Submodule, bis die Spannung am zu entladenden Zwischenkreiskondensator den vorbestimmten Wert unterschreitet. Die Entladeschaltung kann gemeinsam für alle Submodule an einem zentralen Ort, beispielsweise parallel zur elektrischen Leistungsquelle oder dediziert für jedes einzelne Submodul vorhanden sein. Auch eine Entladung über die an die Submodule angeschlossenen Lasten oder über die elektrische Leistungsquelle ist denkbar, so dass die Entladeschaltung in diesem Fall die elektrischen Lasten oder die elektrische Leistungsquelle umfasst.

In einer besonderen Weiterbildung der Erfindung ist das Verriegelungselement ein basierend auf einem Entladestrom gesteuerter Schalter, wobei der Entladestrom bei der Entladung des zu entladenden Zwischenkreiskondensators erzeugt wird. Auf diese Weise kann die Blockade ohne größere und technische Regelkreise erreicht werden, wodurch die Verriegelung und die entsprechende Entriegelung der Bewegung des Zwischenkreiskondensators und/oder des Submoduls zuverlässig und schnell durchgeführt werden kann.

In einer bevorzugten Weiterbildung der Erfindung umfasst die angegebene Stromrichterschaltung einen Entladeschalter zum Entladen des zu entladenden Zwischenkreiskondensators, wenn sich das entsprechende Submodul des zu entladenden Zwischenkreiskondensators in der Entladeposition befindet. Der Entladeschalter kann jedes beliebige technische Element sein, das einen Entladestromkreis für den zu entladenden Zwischenkreiskondensator schließt. Dabei kann der Schaltmechanismus des Entladeschalters mechanisch oder elektrisch beispielsweise durch den Benutzer gesteuert werden.

Besonders bevorzugt wird der Schaltmechanismus aber durch die Position des Submoduls oder des Zwischenkreiskondensators selbst gesteuert. Dazu ist in einer besonders bevorzugten Weiterbildung der Erfindung die Entladeposition des entsprechenden Submoduls von einer Betriebsposition des entsprechenden Submoduls, in der das Submodul mit der Reihenschaltung elektrisch kontaktiert ist, verschieden.

In einer anderen Weiterbildung der Erfindung umfasst die angegebene Stromrichterschaltung ein Anzeigeelement zum Anzeigen der Entladung des zu entladenden Zwischenkreiskondensators. Auf diese Weise kann ein Anwender der Stromrichterschaltung nicht nur an der Blockade des Zwischenkreiskondensators und/oder des Submoduls erkennen, wann die Entladung abgeschlossen ist, sondern auch anhand des Anzeigeelementes, so dass beispielsweise auch Fehler besser gefunden werden können. Lässt sich beispielsweise der Zwischenkreiskondensator und/oder das Submodul trotz angezeigter abgeschlossener Entladung nicht bewegen, so ist dies ein Indiz für einen Fehler.

In einer noch anderen Weiterbildung der Erfindung umfasst die angegebene Stromrichterschaltung eine Testschaltung zum Ausgeben eines Test-Entladestromes an den gesteuerten Schalter. Auf diese Weise kann die Funktionalität der angegebenen Stromrichterschaltung in regelmäßigen Abständen überprüft werden, ohne sie vollständig in Betrieb nehmen zu müssen.

Die Erfindung gibt auch einen Elektromotor an, der Motorwicklungen zum Antreiben eines Rotors und eine angegebene Stromrichterschaltung zur elektrischen Energieversorgung der Motorwicklungen umfasst.

Die Erfindung gibt auch ein Fahrzeug an, das einen angegebenen Elektromotor zu seinem Antrieb umfasst.

Die Erfindung gibt auch ein Verfahren zum Ansteuern einer Stromrichterschaltung an, die wenigstens zwei Submodule in Reihenschaltung, die über eine Induktivität elektrische Leistung aus einer eine Gleichspannung abgebenden Leistungsquelle bezieht, umfasst, wobei jedes Submodul eingangsseitig eine einphasige Halbbrücke und lastseitig eine einphasige Vollbrücke aufweist, und wobei die Halbbrücke und die Vollbrücke gleichspannungsseitig sowie parallel hierzu ein Zwischenkreiskondensator geschaltet sind. Das angegebene Verfahren umfasst die Schritte Erfassen eines Entladestromes aus dem Zwischenkreiskondensator eines der Submodule, und Halten des betreffenden Submoduls, wenn der Entladestrom des Zwischenkreiskondensators erfasst ist.

Weiterbildungen des Verfahrens können Verfahrensschritte sein, die die Merkmale der angegebenen Stromrichterschaltung gemäß den Unteransprüchen sinngemäß realisieren.

Die Erfindung gibt auch eine Steuervorrichtung zur Durchführung des angegebenen Verfahrens an.

In einer Weiterbildung weist die Steuervorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit den Zeichnungen näher erläutert werden, wobei:
- FIG 1: eine Schaltung mit einer beispielhaften Stromrichterschaltung,
- FIG 2: ein Submodul der Stromrichterschaltung der FIG 1,
- FIG 3: eine schematische Darstellung eines Antriebssystems mit der Stromrichterschaltung der FIG 1,
- FIG 4: eine perspektivische Ansicht eines Elektromotors mit der Stromrichterschaltung der FIG 1,
- FIG 5: eine perspektivische Ansicht eines Submoduls mit der Stromrichterschaltung der FIG 1 in einer ersten Lage,
- FIG 6: eine perspektivische Ansicht des Submoduls der FIG 5 in einer zweiten Lage,
- FIG 7: eine Prinzipdarstellung eines Schalters zum Blockieren einer Bewegung des Submoduls der FIG 5 in einem ersten Zustand,
- FIG 8: eine Prinzipdarstellung eines Schalters zum Blockieren einer Bewegung des Submoduls der FIG 5 in einem zweiten Zustand,
- FIG 9: eine Prinzipdarstellung eines Schalters zum Blockieren einer Bewegung des Submoduls der FIG 5 in einem dritten Zustand,
- FIG 10: eine Prinzipdarstellung eines Schalters zum Blockieren einer Bewegung des Submoduls der FIG 5 in einem vierten Zustand,
- FIG 11: eine Prinzipdarstellung eines Schalters zum Blockieren einer Bewegung des Submoduls der FIG 5 in einem fünften Zustand, und
- FIG 12: eine Prinzipdarstellung eines Schalters zum Blockieren einer Bewegung des Submoduls der FIG 5 in einem sechsten Zustand zeigen.

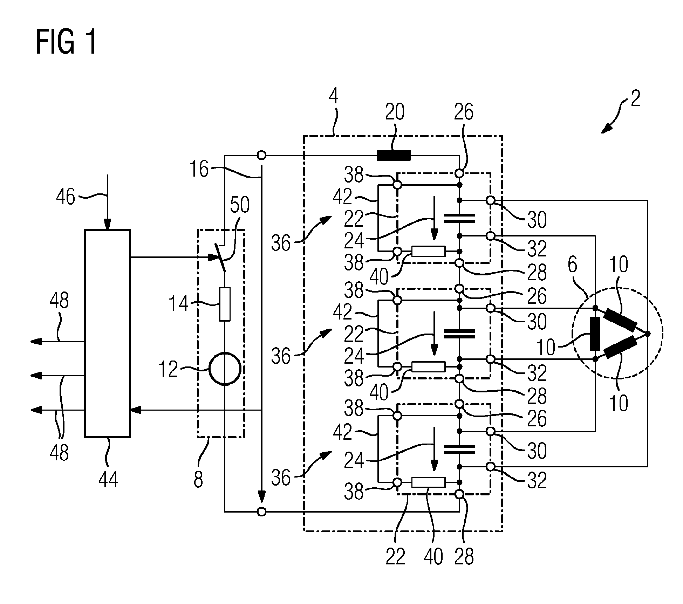

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an.

An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

Zwischen den Eingangsklemmen 26, 28 und den Ausgangsklemmen 30, 32 ist in jedem Submodul 22 ein Zwischenkreiskondensator 34 verschalten, auf den an späterer Stelle näher eingegangen wird. Der Zwischenkreiskondensator 34 kann in jedem Submodul 22 mit einer eigenen Entladeschaltung 36 entladen werden, die zwei Entladeklemmen 38, einen Entladewiderstand 40 und eine Entladebrücke 42 aufweist. In der FIG 1 werden die Teilspannungen 24 der Einfachheit halber als direkt über den Zwischenkreiskondensatoren 34 abfallend dargestellt, um den Erfindungsgegenstand besser darstellen zu können. Die Teilspannung 24 kann jedoch noch umgewandelt werden, bevor sie an den Zwischenkreiskondensator 34 angelegt wird. Darauf wird an späterer Stelle näher eingegangen.

Die Submodule 22 sind in FIG 1 in einer ersten Lage dargestellt, Die Eingangsklemmen 26, 28 mit dem Leistungskreis der Batterie 8 und die Ausgangsklemmen 30, 32 mit den elektrischen Lasten 10 verbunden sind. Jedes Submodul 22 kann aus der ersten Lage in eine zweite Lage verschoben werden, in der die zuvor genannten Verbindungen getrennt werden und die Entladebrücke 40 mit den Entladeklemmen 38 verbunden wird. Auf diese Weise werden in den einzelnen Submodulen 22 die Zwischenkreiskondensatoren 34 über den Entladewiderstand 40 kurzgeschlossen und entladen.

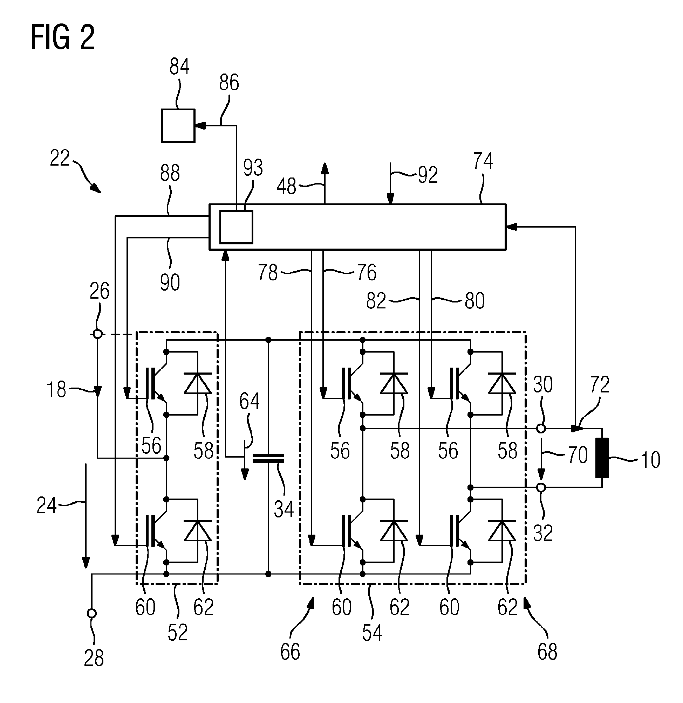

Die Schaltung 2 besitzt ferner ein übergeordnetes Steuergerät 44, nachstehend Master 44 genannt, das die Erzeugung des Drehfeldes mit den als Motorwicklungen ausgebildeten elektrischen Lasten 10 des als Elektromotor ausgebildeten elektrischen Verbrauchers 6 steuert. Dazu kann der Master 44 eine Drehzahl 46 des als Elektromotor ausgebildeten elektrischen Verbrauchers 6 empfangen und basierend auf Stellsignalen 48 die einzelnen Submodule 22 ansteuern. Basierend auf den Stellsignalen 48 stellen die einzelnen Submodule 22 einen in FIG 2 gezeigten elektrischen Strom 72 durch die als Motorwicklungen ausgebildeten elektrischen Lasten 10 ein, um das Drehfeld zu erzeugen.

Der Master 44 ist ferner vorgesehen, die Batteriespannung 16 zu erfassen. Anhand der Batteriespannung 16 überprüft der Master 44 die Schaltung 2 auf Fehler hin. Ist die Batteriespannung 16 beispielsweise zu gering, ist dies ein Anzeichen für einen Kurzschluss. Im Fehlerfalle überführt der Master 44 die Schaltung 2 in einen sicheren Zustand, indem er einen Schalter 50 öffnet, der beispielsweise intern in der Batterie 8 angeordnet sein kann.

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 52, eine Vollbrücke 54 und den Zwischenkreiskondensator 34 auf, die miteinander parallel verschaltet sind.

Die Eingangshalbbrücke 52 weist einen ersten Schalter 56 und eine dazu parallel geschaltete erste Freilaufdiode 58 sowie einen dazu in Reihe geschalteten zweiten Schalter 60 und eine dazu antiparallel geschaltete zweite Freilaufdiode 62 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 58, 62 auch weggelassen werden.

Die erste Teilspannung 24 ist an den zweiten Schalter 60 angelegt, während der erste Schalter 56 in Reihe zwischen dem zweiten Schalter 60 und der Vollbrücke 54 geschaltet ist. Somit kann der zweite Schalter 60 aus Sicht der Vollbrücke 54 den Eingang 26, 28 aus der Batterie 8 kurzschließen, während der erste Schalter 56 (bei geöffneten zweiten Schalter 60) die Vollbrücke 54 in den Strompfad der Batterie 8 legen kann. Werden in jedem Submodul 22 die Schalter 56, 60 in gleicher Weise abwechselnd geöffnet und geschlossen, ist gemeinsam mit der Induktivität 20 ein Hochsetzsteller geschaffen, der Teilspannungen 24 am Eingang 26, 28 hochsetzt, so dass die Summe der Spannungen 64 an den Zwischenkreiskondensatoren 34 höher ist, als die Batteriespannung 16. Weiterhin kann durch die Eingangshalbbrücke 52 die Vollbrücke 54 auch dauerhaft aus der Reihenschaltung der drei Submodule 22 entfernt werden, wenn der zweite Schalter 60 dauerhaft geschlossen bleibt.

Die Vollbrücke 54 realisiert einen Vierquadrantensteller, der eine erste Wechselrichterhalbbrücke 66 und eine zweite Wechselrichterhalbbrücke 68 aufweist. Beide Wechselrichterhalbbrücken 66, 68 sind analog zur Eingangshalbbrücke 52 aufgebaut. Die hochgesetzte Teilspannung 24, die über den Zwischenkreiskondensator 34 geglättet wird, kann durch eine geeignete Ansteuerung der Vollbrücke 54 in eine Wechselspannung 70 umgewandelt werden. Die Wechselspannung 70 wird an die elektrische Last 10 angelegt und ruft einen entsprechenden Wechselstrom 72 durch die elektrische Last 10 hervor. Gibt die elektrische Last 10 elektrische Energie an die als Vierquadrantensteller ausgeführte Vollbrücke 54 ab, so kann diese den entsprechenden Leistungsfluss zurück in das Submodul 22 leiten.

Zur Ansteuerung der Vollbrücke 54 ist im Submodul 22 ein lokales Steuergerät, nachstehend Slave 74 genannt, vorgesehen. Der Slave 74 empfängt vom Master 44 über eine nicht gezeigte sichere elektrische Trennung das Stellsignal 48. Basierend auf dem Stellsignal 48 leitet der Slave 74 ein erstes Ansteuersignal 76 für den ersten Schalter 56 der ersten Wechselrichterhalbbrücke 66, ein zweites Ansteuersignal 78 für den zweiten Schalter 60 der ersten Wechselrichterhalbbrücke 68, ein drittes Ansteuersignal 80 für den ersten Schalter 58 der zweiten Wechselrichterhalbbrücke 68 und ein viertes Ansteuersignal 82 für den zweiten Schalter 60 der zweiten Wechselrichterhalbbrücke 68 ab, so dass die Wechselrichterhalbbrücken 66, 68 den Batteriestrom 18 zerhacken und als Wechselstrom 72 durch die elektrische Last 10 so einstellen, das er bestimmten Vorgaben folgt, die dem Slave im Stellsignal 36 mitgeteilt werden. Die Erzeugung der Ansteuersignale 76 bis 82 kann dabei durch eine offene Steuerung oder basierend auf einer Messung des Wechselstromes 72 durch eine geschlossene Regelung erfolgen.

Der Slave 74 kann ferner anhand der am Zwischenkreiskondensator 34 abfallenden Spannung 64 einen Fehler im Submodul 22 erfassen. Der Zwischenkreiskondensator 34 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Zwischenkreiskondensatorspannung 64 begrenzt ist. Überschreitet diese einen bestimmten Wert, so ist dies demnach ein Hinweis auf einen fehlerhaften elektrischen Energiefluss durch das Submodul 22, da der Zwischenkreiskondensator 34 nun nicht mehr ausschließlich elektrische Energie aus dem Blindleistungsfluss sondern auch aus einem Wirkleistungsfluss speichert, was darauf hindeutet, dass eventuell eine Unterbrechung im Submodul 22 vorliegen könnte. Unterschreitet die Zwischenkreiskondensatorspannung 64 hingegen einen weiteren kleineren vorbestimmten Wert, so ist dies ein Hinweis auf einen Kurzschluss zum Zwischenkreiskondensator 34. Der Auftritt eines Fehlers kann beispielsweise durch eine Signalleuchte 84 angezeigt werden, die über eine Fehlersignal 86 durch den Slave 74 angezeigt wird. Auf diese Weise kann dem Anwender oder einem Servicepersonal ein gezielter Hinweis gegeben werden, in welchem Submodul 22 ein Fehler aufgetreten ist. Dies erleichtert die Fehlersuche.

In beiden Fällen kann der Slave 74 mit einem fünften Ansteuersignal 88 den zweiten Schalter 60 dauerhaft schließen, so den Eingang 26, 28 der Eingangshalbbrücke 52 kurzschließen und das Submodul 22 so aus dem Leistungskreis der Stromrichterschaltung 4 entfernen, ohne, dass die restlichen Submodule 22 davon betroffen wären.

Alternativ oder zusätzlich kann der Kurschluss auch über den ersten Schalter 56 der Eingangshalbbrücke 52 und einer der beiden Wechselrichterhalbbrücken 66, 68 erreicht werden, wobei der erste Schalter 56 vom Slave durch ein sechstes Ansteuersignal 90 angesteuert wird. Dieser alternative Kurzschluss sollte jedoch erst geschalten werden, nachdem der Zwischenkreiskondensator 34 über die in FIG 1 gezeigte Entladeschaltung 36 entladen wurde.

Zusätzlich zum Kurzschluss kann der Zwischenkreiskondensator 34 auch entladen werden, wenn der Slave 74 einen Fehler erfasst. Diese Entladung des Zwischenkreiskondensators 34 im Submodul 22 kann beispielsweise durch den Slave 74 selbst oder auch durch den Master 44 über eine Anweisung 92 initiiert werden, beispielsweise, wenn die Stromrichterschaltung 4 abgestellt werden soll. Auf diese initiierte Entladung wird an späterer Stelle detailliert eingegangen.

Der Slave 74 weist ferner einen internen Zähler 93 auf, der vorgesehen ist, ab einem vorgegebenen Zeitpunkt eine verstrichene Zeitdauer zu zählen. Der vorgegebene Zeitpunkt kann beispielsweise die erste Inbetriebnahme des Submoduls 22 sein, so dass aus dem Submodul 22 seine Betriebsdauer ableitbar ist. Überschreitet die Betriebsdauer eine zu erwartende Lebensdauer so kann dies ebenfalls über die Signalleuchte 84 angezeigt werden.

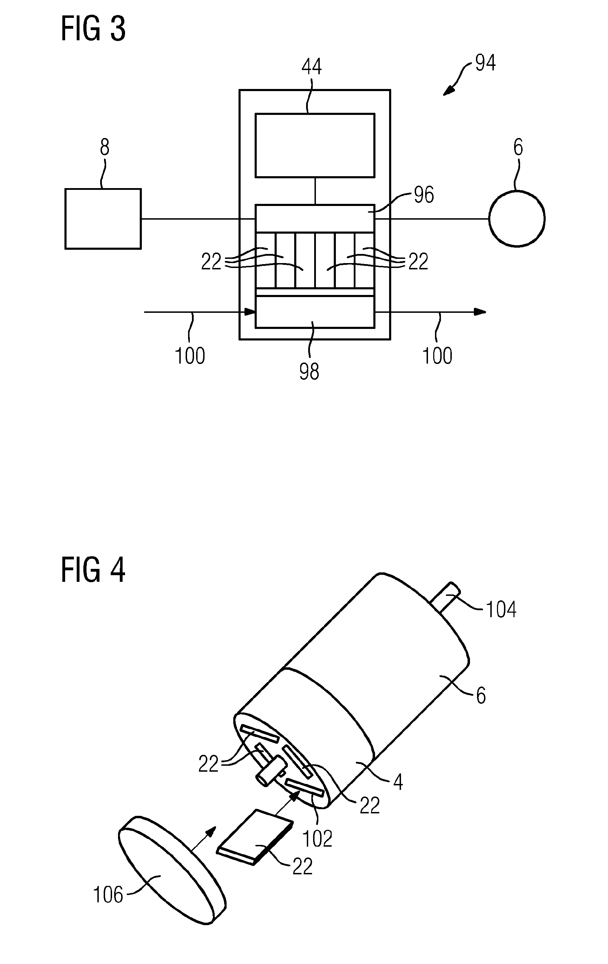

Es wird auf FIG 3 Bezug genommen, die eine schematische Darstellung eines Antriebssystems 94 mit der Stromrichterschaltung der FIG 1 zeigt. In FIG 3 werden zu FIG 1 und 2 gleiche Elemente mit gleichen Bezugszeichen versehen und nicht noch einmal beschrieben.

In FIG 3 sind die einzelnen Submodule auf einer Leistungsschiene 96 mechanisch befestigt. Auf der Leistungsschiene 96 befinden sich in nicht gezeigter Weise auch die Eingänge 26, 28 und die Ausgänge 30, 32. Die Eingänge 26, 28 als auch die Ausgänge 30, 32 auf der Leistungsschiene 96 stellen damit verschiedene Schnittstellen dar, mit der die einzelnen Submodule 22 zwischen der Batterie 8 und dem als Elektromotor ausgebildeten elektrischen Verbraucher 6 lösbar verschaltet werden können.

Neben der Leistungsschiene 96 umfasst das Antriebssystem 94 auch eine Kühlung 98 für die Submodule, die von einem Kühlmittel 100 durchflossen werden kann.

Es wird auf FIG 4 Bezug genommen, die eine perspektivische Ansicht des als Elektromotor ausgebildeten elektrischen Verbrauchers 4 mit der Stromrichterschaltung 4 der FIG 1 zeigt. In FIG 4 werden zu den FIG 1 bis 3 gleiche Elemente mit gleichen Bezugszeichen versehen und nicht noch einmal beschrieben.

Wie in FIG 4 gezeigt, können die einzelnen Submodule 22 in vorgefertigten Schächten 102 aufgenommen werden, die sich axial zu einer Motorwelle 104 erstrecken. Am zum Elektromotor 6 hin gerichteten Ende der Schächte 102 kann in nicht gezeigter Weise die Leistungsschiene 96 der Stromrichterschaltung 4 ausgebildet sein. Durch Einschieben der Submodule 22 in die Schächte 102 werden diese dann mit der Leistungsschiene 96 elektrisch kontaktiert.

Mechanisch können die Submodule 22 durch einen Deckel 106 in den Schächten 102 gehalten werden.

Ist eines der Submodule 22 defekt oder zu alt, was beispielsweise durch die Signalleuchte 84 angezeigt wird, kann ein Anwender einfach das betreffende Submodul 22 aus seiner Tasche entfernen und durch ein entsprechend anderes Submodul 22 ersetzen.

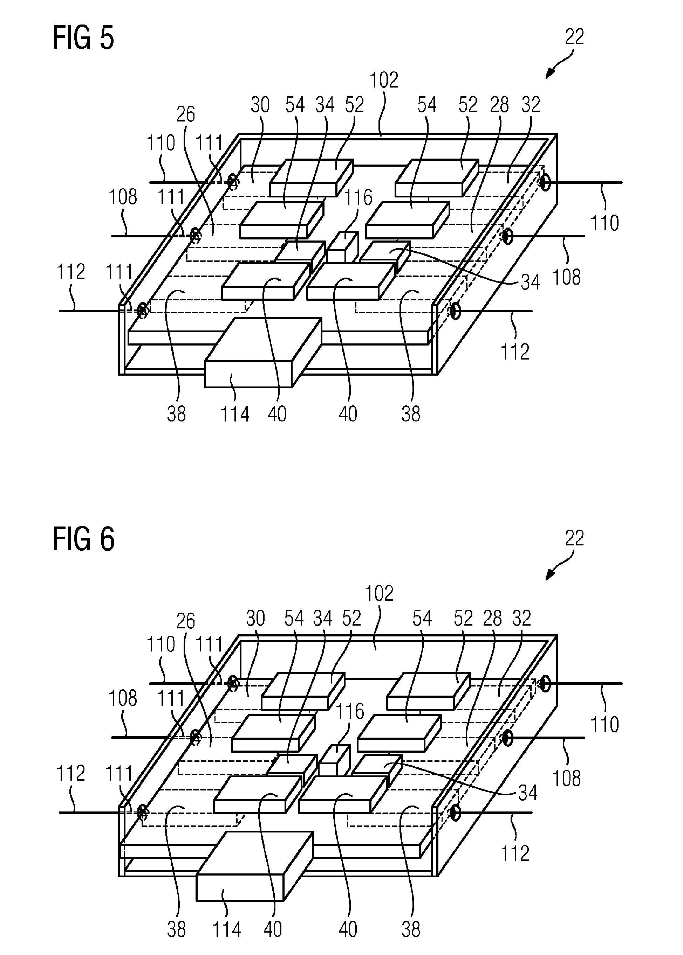

Es wird Bezug auf FIG 5 genommen, die eine perspektivische Ansicht eines der Submodule 22 in der Stromrichterschaltung 4 der FIG 1 in einer ersten Lage zeigt. In FIG 5 werden zu den FIG 1 bis 4 gleiche Elemente mit gleichen Bezugszeichen versehen und nicht noch einmal beschrieben.

In FIG 5 ist das gezeigte Submodul 22 in seinem Schacht 102 aufgenommen, wobei der Schacht 102 in FIG 5 der Übersichtlichkeit halber von einer Seite her geöffnet dargestellt ist.

In den Schacht 102 führt eine erste Leitung 108, die die Verbindung zur Batterie 8 herstellt, eine zweite Leitung 110 die Verbindung zur elektrischen Last 10 herstellt und eine dritte Leitung 112, die die Verbindung zur Entladeschaltung 36 herstellt.

In der in FIG 5 gezeigten Lage des Submoduls 22 im Schacht 102 sind die Eingangsklemmen 26, 28 des Submoduls 22 mit der ersten Leitung 108 und die Ausgangsklemmen 30, 32 des Submoduls 22 mit der zweiten Leitung 110 elektrisch kontaktiert. Die erste und zweite Leitung 108, 110 weisen an ihren Kontaktbereichen mit den Klemmen 26 bis 32 jeweils einen Vorsprung 111 von einer Wandung des Schachtes 102 auf. Die Vorsprünge 111 können die Leitungen 108, 110 nicht nur elektrisch kontaktieren sondern auch einen leichten Druck auf die Klemmen 26 bis 32 ausüben und das Submodul 22 so mechanisch positionieren.

Zwischen den Endladeklemmen 38 und der dritten Leitung 112 besteht in der in FIG 3 gezeigten Lage kein elektrischer Kontakt.

Über einen Griff 114 kann das Submodul 22 aus dem Schacht 102 gezogen werden.

Am Schacht 102 ist ferner ein Schalter 116 angeordnet, der mit der dritten Leitung 112 elektrisch verbunden ist. Auf den Schalter 116 wird an späterer Stelle näher Bezug genommen.

Es wird Bezug auf FIG 6 genommen, die eine perspektivische Ansicht eines der Submodule 22 in der Stromrichterschaltung 4 der FIG 1 in einer ersten Lage zeigt. In FIG 6 werden zu den FIG 1 bis 5 gleiche Elemente mit gleichen Bezugszeichen versehen und nicht noch einmal beschrieben.

In FIG 6 wurde das Submodul 22 beispielsweise am Griff 114 gezogen, so dass sich die Eingangs- und Ausgangsklemmen 26 bis 32 von den Vorsprüngen 111 gelöst haben und die elektrische Kontaktierung zwischen diesen Klemmen 26 bis 32 und der ersten und zweiten Leitung 108, 110 unterbrochen ist. Damit kann keine elektrische Leistung mehr von den Eingangsklemmen 26, 28 auf die Ausgangsklemmen 30, 32 übertragen und die elektrische Last 10 mit elektrischer Energie versorgt werden.

Demgegenüber sind jedoch die Entladeklemmen 38 über entsprechende Vorsprünge 111 mit der dritten Leitung 112 verbunden, so dass der Zwischenkreiskondensator 34 in der in FIG 6 gezeigten Position des Submoduls 22 entladen wird.

Die Vorsprünge 111 klemmen die Entladeklemmen 38 ein und erhöhen den mechanischen Bewegungswiderstand des Submoduls 22 in dieser Lage. Auf diese Weise kann eine gewisse Verweildauer des Submoduls 22 in dieser Lage gesichert werden, wodurch der Zwischenkreiskondensator 34 vollständiger entladen werden kann.

Wie bereits erwähnt, kann die Entladung des Zwischenkreiskondensators 34 eines Submoduls 22 auch beispielsweise basierend auf einem Fehler im Submodul 22 oder einer Anweisung 92 initiiert werden. Dazu kann das Submodul 22 einen nicht weiter dargestellten Aktor aufweisen, der durch den Slave 74 gesteuert werden kann. Der Aktor kann das Submodul 22 von seiner ersten, in FIG 5 gezeigten Betriebslage in die zweite, in FIG 6 gezeigte Entladelage überführen. Alternativ oder zusätzlich kann der Aktor das Submodul 22 ebenfalls in die Entladelage überführen, wenn der Deckel 106 entfernt wird.

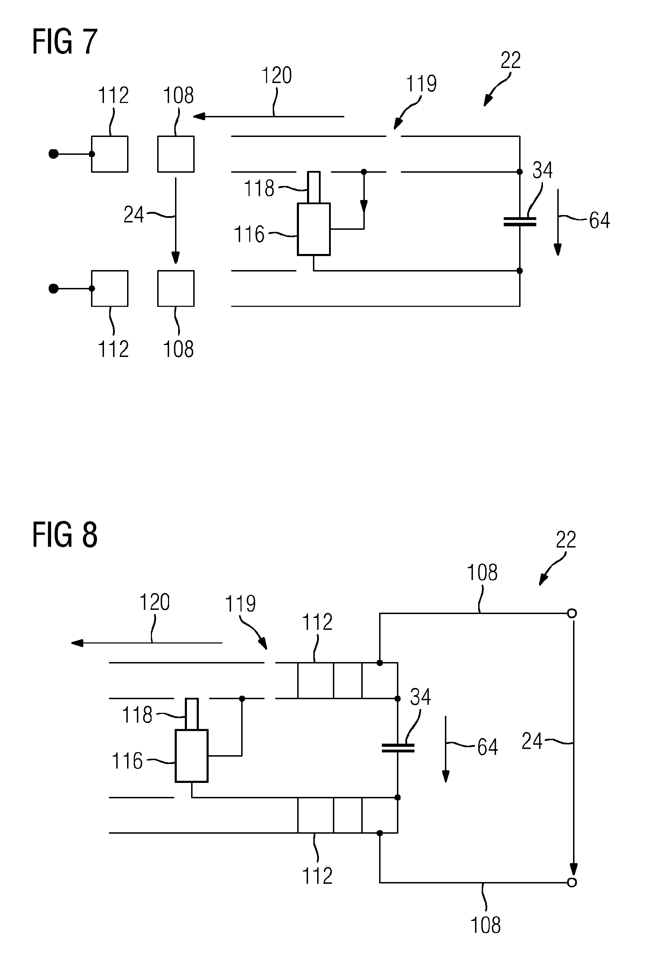

Es wird auf die FIG 7 bis 12 Bezug genommen, die jeweils eine Prinzipdarstellung des Schalters 116 zum Blockieren einer Bewegung des Submoduls 22 der FIG 5 und 6 in verschiedenen Zuständen zeigen.

Bevor das Submodul 22 in den Schacht 102 eingeschoben ist, sollte die Batterie 8 abgeschaltet sein, so dass an den ersten Leitungen 108 keine Teilspannung 24 abfällt. Der Zwischenkreiskondensator 34 ist entladen, so dass auch an ihm keine Spannung 64 abfällt. Der Schalter 116 weist einen durch den Schalter 116 ausfahrbaren Stößel 118 auf, der sich den Leitungen 108, 112 und der nicht gezeigten zweiten Leitung 110 in den Weg stellen kann. Darauf wird an späterer Stelle näher eingegangen. Im Submodul 22 befindet sich eine Kontaktbrücke 119, über die der Schalter 116 aus dem Zwischenkreiskondensator 34 mit elektrischer Energie versorgt werden kann.

Zunächst wird das Submodul 22 wie in FIG 7 gezeigt, in einer Bewegungsrichtung 120 in den Schacht 102 mit den Leitungen 108, 112 eingeschoben.

Nachdem das Submodul 22 in den Schacht 102 eingeschoben und wie in FIG 8 gezeigt die Teilspannung 24 die erste Leitung 108 am Zwischenkreiskondensator kontaktiert ist, kann die Batteriespannung 16 der Batterie 8 eingeschaltet und die Teilspannung 24 an den Zwischenkreiskondensator 34 angelegt werden. Die Kontaktbrücke 119 bleibt geöffnet, da die dritte Leitung 112 aus Sicht des Zwischenkreiskondensators 34 vor der Kontaktbrücke 119 liegt.

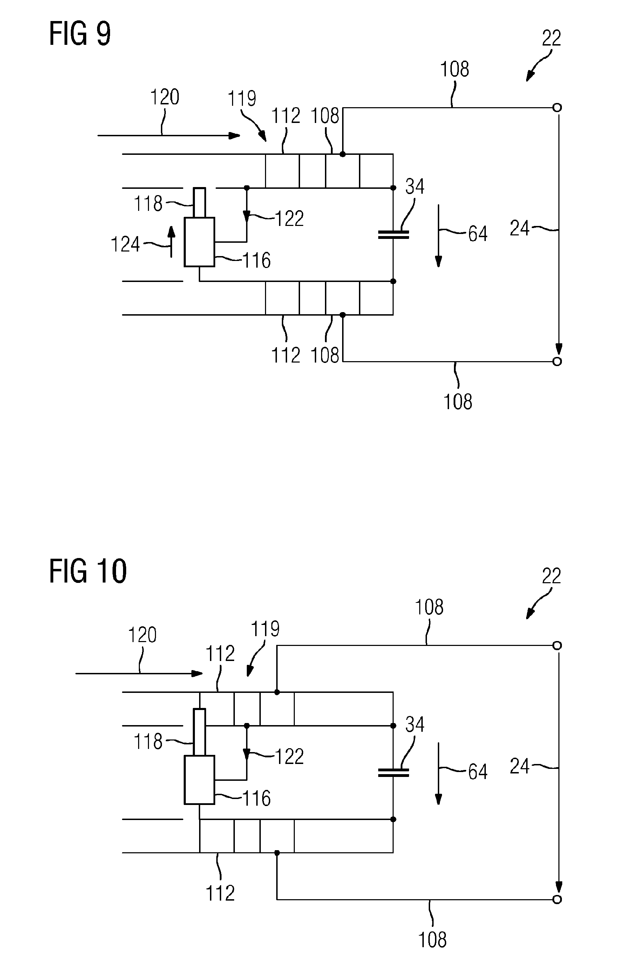

Wird das Submodul 22 wie in FIG 9 gezeigt, in umgekehrter Bewegungsrichtung 120 bewegt und aus dem Schacht 102 herausgezogen, schließt die dritte Leitung die Kontaktbrücke 119, so dass der Schalter 116 mit einem Schalterstrom 122 aufgrund der Teilspannung 24 und der Kondensatorspannung 64 versorgt wird. Durch diese Stromzufuhr bewegt der Schalter 116 den Stößel 118 wie in FIG 9 durch eine Pfeil 124 angedeutet in den Weg der dritten Leitung 112 und verhindert so, dass das Submodul 22 aus dem Schacht 102 herausgezogen werden kann.

Die dritte Leitung 112 kann somit wie in FIG 10 gezeigt, maximal an den Stößel 118 anschlagen.

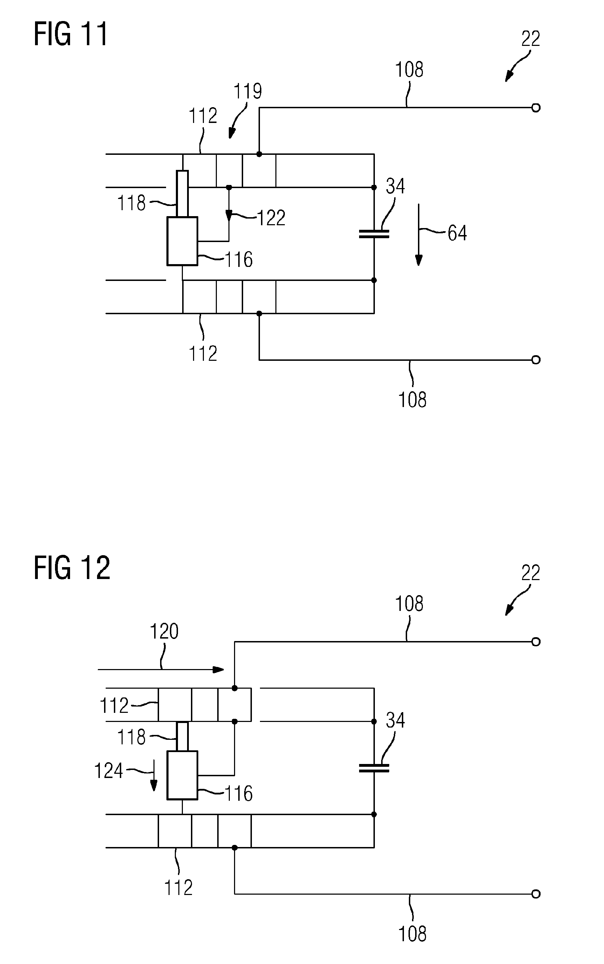

In jedem Submodul 22 kann beispielsweise in nicht gezeigter Weise die Steuervorrichtung 74 den Strom 122 erfassen und gegebenenfalls die Batteriespannung 16 abstellen, so dass wie in FIG 11 gezeigt, am Zwischenkreiskondensator 34 keine Teilspannung 24 mehr abfällt. Auf diese Weise wird der Schalter 116 ausschließlich durch den Zwischenkreiskondensator 34 gespeist.

Ist der Zwischenkreiskondensator 34 vollständig entladen, bricht die elektrische Energieversorgung des Schalters 116 zusammen, der Schalter 116 zieht den Stößel 118 wieder ein und gibt den Weg für das Submodul 22 wieder frei, so dass es wie in FIG 12 gezeigt, an der dritten Leitung 112 vorbei aus dem Schacht 102 bewegt beziehungsweise gezogen werden kann. Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität (20) elektrische Leistung aus einer eine Gleichspannung (18) abgebenden Leistungsquelle (8) bezieht, wobei jedes Submodul (22) eingangsseitig (26,28) eine einphasige Halbbrücke (52) und lastseitig (30,32) eine einphasige Vollbrücke (54) aufweist, und wobei die Halbbrücke (52) und die Vollbrücke (54) gleichspannungsseitig sowie parallel hierzu ein Zwischenkreiskondensator (34) geschaltet sind, **gekennzeic hnet** durch ein Verriegelungselement (116) in wenigstens einem Submodul (22) zum Blockieren einer Bewegung (120) wenigstens des Zwischenkreiskondensators (34) des wenigstens einen Submoduls (22), wenn eine Spannung (64) am Zwischenkreiskondensator (34) einen vorbestimmten Wert überschreitet.

2. Stromrichterschaltung (4) nach Anspruch 1, **gekennzeichnet durch** eine Entladeschaltung zum Entladen des Zwischenkreiskondensators (34) mindestens eines der Submodule (22), bis die Spannung (64) am zu entladenden Zwischenkreiskondensator (34) den vorbestimmten Wert unterschreitet.

3. Stromrichterschaltung (4) nach Anspruch 2, **dadurch gekennzeichnet , dass** das Verriegelungselement (116) ein basierend auf einem Entladestrom (122) gesteuerter Schalter ist, wobei der Entladestrom (122) bei der Entladung des zu entladenden Zwischenkreiskondensators (34) erzeugt wird.

4. Stromrichterschaltung (4) nach Anspruch 3, **gekennzeichnet durch** einen Entladeschalter zum Entladen des zu entladenden Zwischenkreiskondensators (34), wenn sich das entsprechende Submodul (22) des zu entladenden Zwischenkreiskondensators (34) in der Entladeposition befindet.

5. Stromrichterschaltung (4) nach Anspruch 4, **dadurch gekennzeichnet , dass** die Entladeposition des entsprechenden Submoduls (22) von einer Betriebsposition des entsprechenden Submoduls (22) verschieden ist, wobei das entsprechende Submodul (22) in der Betriebsposition mit der Reihenschaltung elektrisch kontaktiert ist.

6. Stromrichterschaltung (4) nach einem der Ansprüche 2 bis 5, **gekennzeichnet durch** ein Anzeigeelement zum Anzeigen der Entladung des zu entladenden Zwischenkreiskondensators (34).

7. Stromrichterschaltung (4) nach einem der Ansprüche 3 bis 6, **gekennzeichnet durch** eine Testschaltung zum Ausgeben eines Test-Entladestromes an den gesteuerten Schalter.

8. Elektromotor umfassend Motorwicklungen (10) zum Antreiben eines Rotors (92) und eine Stromrichterschaltung (4) nach einem der Ansprüche 1 bis 7 zur elektrischen Energieversorgung der Motorwicklungen (10).

9. Fahrzeug umfassend einen Elektromotor nach Anspruch 3 zu seinem Antrieb.

10. Verfahren zum Ansteuern einer Stromrichterschaltung (4), die wenigstens zwei Submodule (22) in Reihenschaltung, die über eine Induktivität (20) elektrische Leistung aus einer eine Gleichspannung (18) abgebenden Leistungsquelle (8) bezieht, umfasst, wobei jedes Submodul (22) eingangsseitig (26, 28) eine einphasige Halbbrücke (52) und lastseitig (30,32) eine einphasige Vollbrücke (54) aufweist, und wobei die Halbbrücke (52) und die Vollbrücke (54) gleichspannungsseitig sowie parallel hierzu ein Zwischenkreiskondensator (34) geschaltet sind, **gekennzeichnet durch** Erfassen eines Entladestromes (122) aus dem Zwischenkreiskondensator (34) eines der Submodule (22), und Halten des betreffenden Submoduls (22), wenn der Entladestrom (122) des Zwischenkreiskondensators (34) erfasst ist.

11. Steuervorrichtung (74) zur Durchführung des Verfahrens nach Anspruch 10.
